# EUROPEAN PATENT APPLICATION

(11) **EP 4 783 610 A1**
(43) Date of publication of application: **29.07.2026**
(21) Application number: 24885399.6
(22) Date of filing: 09.10.2024
(51) Int. Cl.: H04R 3/00, B61D 33/00, B64D 11/06, H04R 1/02, H04R 1/26

(54) **SOUND CONTROL SYSTEM**

(30) Priority: 31.10.2023 JP 2023186855
(71) Applicant: PANASONIC INTELLECTUAL PROPERTY MANAGEMENT CO., LTD., Kadoma-shi, Osaka 571-0057 (JP)
(72) Inventor: CHO Daiki, Kadoma-shi, Osaka 571-0057 (JP); MIYANAKA Ryota, Kadoma-shi, Osaka 571-0057 (JP)
(74) Representative: Eisenführ Speiser
(86) International application number: PCT/JP2024/036167
(87) International publication number: WO 2025/094624

(57) **Abstract**

A sound control system includes a seat including a seating part and a backrest part configured to be reclined with respect to the seating part, a first speaker disposed on the backrest part, a peripheral wall disposed to surround at least a part of a periphery of the seat, a microphone disposed on an upper portion of the peripheral wall, and a processor. The processor controls a playback level of sound reproduced by the first speaker based on (i) environmental sound collected by the microphone and (ii) an orientation of the backrest part.

## Description

### TECHNICAL FIELD

The present disclosure relates to a sound control system.

### BACKGROUND ART

For example, in moving bodies such as an aircraft and a railway vehicle, a music service may be provided to an occupant seated in a seat. In such a moving body, due to generation of noise during traveling, an occupant may not be able to enjoy music played through a music service.

PTL 1 discloses a guest room suite of an aircraft. A guest room suite of an aircraft includes a seat having a backrest adjustable between an upright position and at least one reclining position, a plurality of first drivers positioned in front of the seat, a plurality of second drivers disposed on the left and right sides of a center plane of the seat, a sensor that detects a position of the backrest, and a controller operable to adjust an output of at least one of a set of the first drivers and a set of the second drivers based on the position of the backrest detected by the sensor.

### Citation List

### Patent Literature

PTL 1: US 2021/0021932 A

### SUMMARY OF THE INVENTION

However, in a case of listening to content such as a music service in a moving body, a headphone or an earphone is used. However, in a case where an occupant wears the headphone or the earphone for a long time, there is a possibility that the occupant feels uncomfortable. Therefore, it is conceivable to provide content such as a music service without using a headphone or an earphone. However, when sound volume from a speaker is increased, sound leakage occurs and noise is generated for other occupants, and when the sound volume from the speaker is decreased, there is a problem that it is difficult to hear the sound from the speaker in a moving body in a noise environment.

Therefore, an object of the present disclosure is to provide a sound control system configured to secure sound volume from a speaker while suppressing sound leakage in a noise environment of a moving body.

A sound control system according to an aspect of the present disclosure includes: a seat including a seating part and a backrest part configured to be reclined with respect to the seating part; a first speaker disposed on the backrest part; a peripheral wall disposed to surround at least a part of a periphery of the seat; a microphone disposed on an upper portion of the peripheral wall; and a processor, wherein the processor controls a playback level of sound reproduced by the first speaker based on (i) environmental sound collected by the microphone and (ii) an orientation of the backrest part.

According to the sound control system according to the aspect of the present disclosure, it is possible to secure sound volume from the speaker while suppressing sound leakage in a noise environment of a moving body.

### BRIEF DESCRIPTION OF THE DRAWINGS

Fig. 1A is a schematic diagram illustrating a private room in a moving body in which a sound control system according to an exemplary embodiment is disposed.
Fig. 1B is another schematic diagram illustrating the private room in the moving body in which the sound control system according to the exemplary embodiment is disposed.
Fig. 2 is a block diagram illustrating the sound control system according to the exemplary embodiment.
Fig. 3A is a diagram illustrating transfer functions of respective combinations of a pair of first speakers and a pair of microphones.
Fig. 3B is a diagram illustrating transfer functions of respective combinations of a pair of second speakers and the pair of microphones.
Fig. 4 is a diagram illustrating an example of characteristics of noise, an example of characteristics of sound convolved by the transfer function, and an example of characteristics of a suppression filter.
Fig. 5 is a diagram illustrating an orientation of a backrest part of a seat disposed in the private room, a position of the first speaker disposed on a peripheral wall of the private room, and a position of the second speaker.

### DESCRIPTION OF EMBODIMENT

Hereinafter, exemplary embodiments will be described with reference to the drawings. Note that the exemplary embodiments described hereinafter provide comprehensive or specific examples. Numerical values, shapes, materials, components, arrangement positions and connection forms of the components, steps, order of the steps, and the like indicated in the following exemplary embodiments are an example, and are not intended to limit the present disclosure. Further, among the components in the following exemplary embodiments, components not recited in the independent claims are described as optional components.

Each of the drawings is a schematic diagram and is not necessarily exactly illustrated. In the drawings, substantially the same components are denoted by the same reference numerals, and redundant description may be omitted or simplified.

### (Exemplary embodiments)

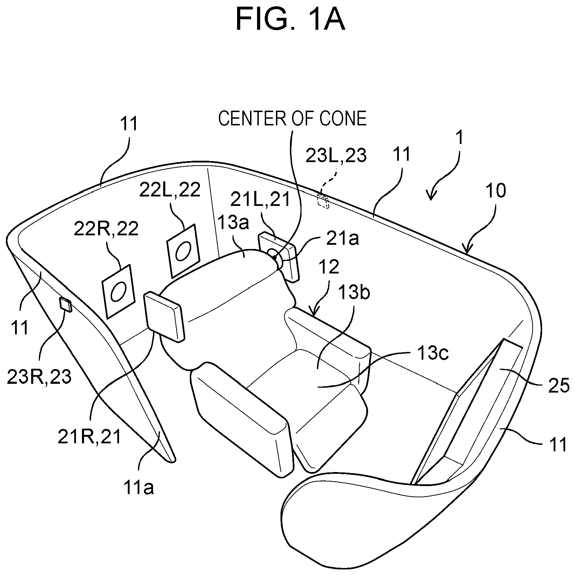

First, sound control system 1 according to the present exemplary embodiment will be described with reference to Figs. 1A to 5.

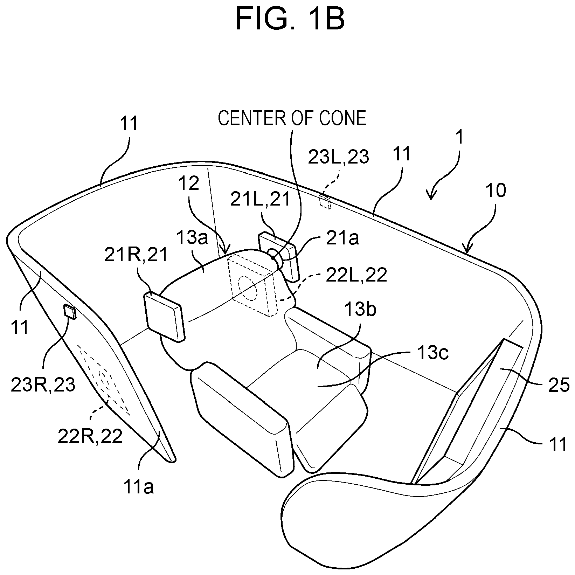

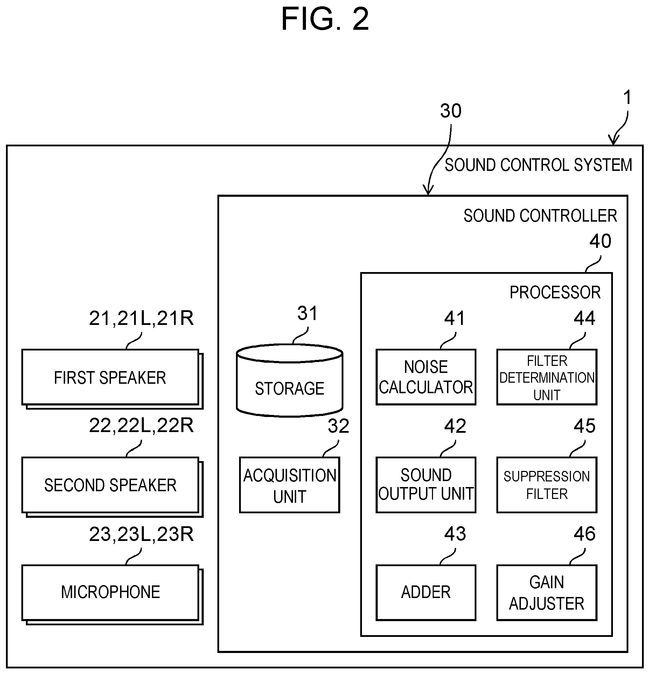

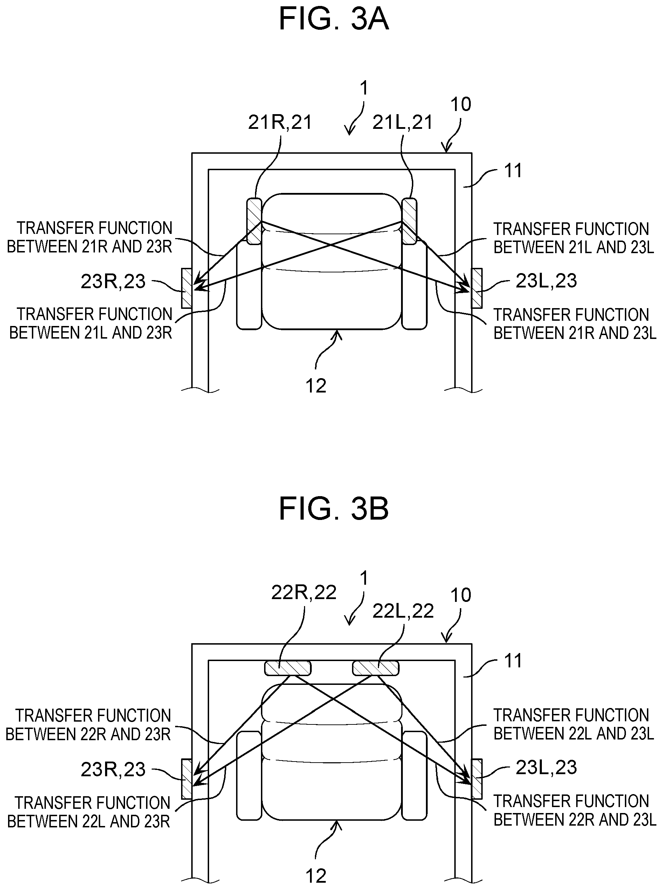

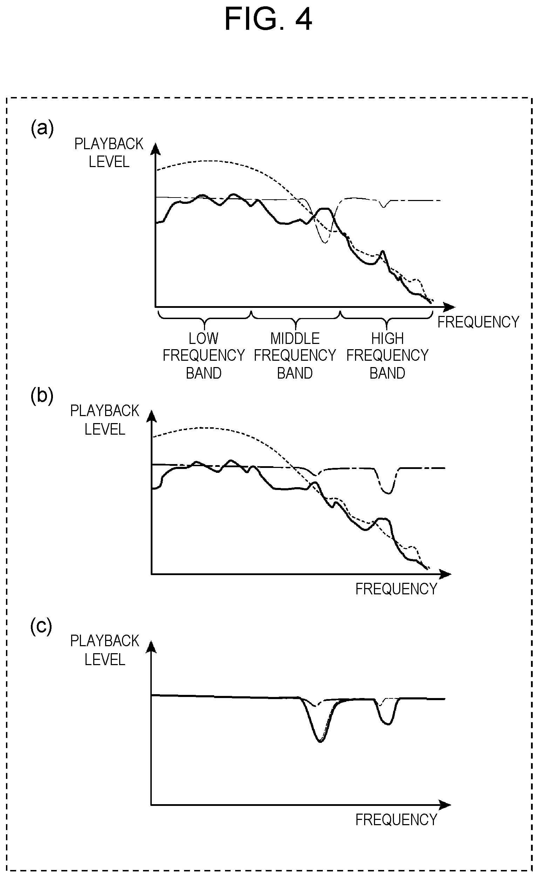

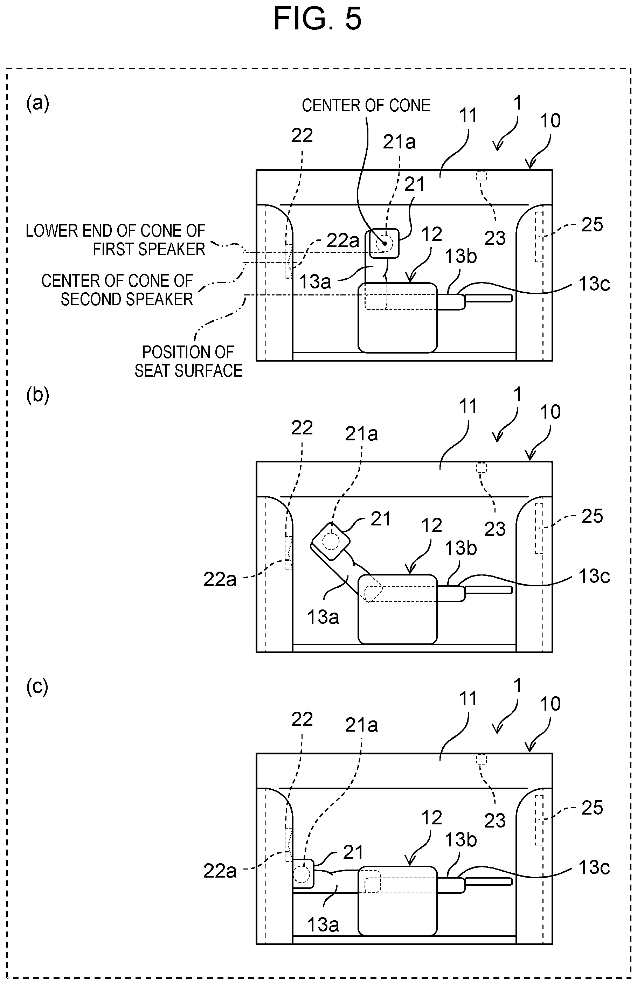

Fig. 1A is a schematic diagram illustrating private room 10 in a moving body in which sound control system 1 according to the exemplary embodiment is disposed. Fig. 1B is another schematic diagram illustrating private room 10 in the moving body in which sound control system 1 according to the exemplary embodiment is disposed. Fig. 1B illustrates a case where second speaker 22 is disposed on peripheral wall 11 disposed on the left and right sides of seat 12. Here, the left and right sides mean the right side and the left side of an occupant seated on seat 12. Fig. 2 is a block diagram illustrating sound control system 1 according to the exemplary embodiment. Fig. 3A is a diagram illustrating transfer functions of respective combinations of a pair of first speakers 21R and 21L and a pair of microphones 23R and 23L. Fig. 3B is a diagram illustrating transfer functions of respective combinations of a pair of second speakers 22R and 22L and the pair of microphones 23R and 23L. Fig. 4 is a diagram illustrating examples of characteristics of noise, examples of characteristics of sound convolved by the transfer function, and examples of characteristics of suppression filter 45. In part (a) of Fig. 4, an example of the characteristics of the noise is indicated by a broken line, an example of the characteristics of the sound convolved by the transfer function between first speaker 21R and microphone 23R is indicated by a solid line, and an example of the characteristics of suppression filter 45 is indicated by an alternate long and short dash line. In part (b) of Fig. 4, an example of the characteristics of the noise is indicated by a broken line, an example of the characteristics of the sound convolved by the transfer function between first speaker 21L and microphone 23R is indicated by a solid line, and an example of the characteristics of suppression filter 45 is indicated by an alternate long and short dash line. Part (c) of Fig. 4 illustrates an example (example of the characteristics including parts (a) and (b) of Fig. 4) of characteristics of a suppression filter corresponding to the combination of the pair of first speakers 21R, 21L and microphone 23R. In part (c) of Fig. 4, a broken line indicates an example of the characteristics of suppression filter 45 calculated from the relationship between first speaker 21R and microphone 23R illustrated in part (a) of Fig. 4, and an alternate long and short dash line indicates an example of the characteristics of suppression filter 45 calculated from the relationship between the first speaker 21L and the microphone 23R illustrated in part (b) of Fig. 4. A solid line indicates an example of the characteristics of suppression filter 45 in the relationship between the pair of first speakers 21R and 21L and microphone 23R calculated from suppression filter 45 indicated by a broken line and an alternate long and short dash line. Note that an example of characteristics of sound calculated from the transfer function in the relationship between the pair of first speakers 21R and 21L and microphone 23L, an example of the characteristics of the suppression filter 45, and an example of characteristics of noise at the position of microphone 23L are not illustrated. Furthermore, an example of characteristics of sound calculated from the transfer function, an example of characteristics of suppression filter 45, and an example of characteristics of noise at the positions of the microphones 23R and 23L in all combinations of the pair of second speakers 22R and 22L and the pair of microphones 23R and 23L are not illustrated. Fig. 5 is a diagram illustrating an orientation of backrest part 13a of seat 12 disposed in private room 10, the position of first speaker 21 disposed on peripheral wall 11 of private room 10, and the position of second speaker 22. Part (a) of Fig. 5 illustrates a case where backrest part 13a is in an upright orientation. Part (b) of Fig. 5 illustrates a position where backrest part 13a is inclined from the upright orientation and that is between the upright orientation and a reclining orientation. Part (c) of Fig. 5 illustrates a case where backrest part 13a changes from the upright orientation to the reclining orientation.

### <Overview>

Next, an outline of sound control system 1 according to the present exemplary embodiment will be described.

As illustrated in Figs. 1A and 1B, in the present exemplary embodiment, the pair of first speakers 21R and 21L may be collectively referred to simply as first speaker 21. The pair of second speakers 22R and 22L may be collectively referred to simply as second speaker 22. In addition, the pair of microphones 23R and 23L may be collectively referred to simply as microphone 23.

Sound control system 1 according to the present exemplary embodiment is mounted on a moving body such as an aircraft or a railway vehicle. For example, in a case where the moving body is an aircraft, sound emitted from an engine of the aircraft is accompanied by rotation sound of a propeller incorporated in each engine, reverberation of an air flow during flight of the aircraft, and the like, and thus becomes a large noise source. Under such an environment where noise is generated by traveling of the moving body, when the occupant riding on the moving body listens to sound of content such as a music service, sound control system 1 can make it easy for the occupant present in a target space to hear the sound. Here, the target space is a sound space in which the occupant can listen to sound in a noise environment.

For example, in a case where the moving body is an aircraft, a private room type target space such as a first-class cabin or a business class cabin is formed. In addition, even in a case where the moving body is a railway vehicle such as a sleeper train, a private room type target space is formed. Sound control system 1 according to the present exemplary embodiment is mounted in each of private rooms 10 in such a moving body. Figs. 1A and 1B in the present exemplary embodiment mainly illustrate a case where sound control system 1 is applied to an aircraft.

In such a noise environment, when the occupant listens to sound of content such as music or a movie in private room 10, sound leakage occurs from private room 10 in a frequency band in which a sound pressure level of the sound of the reproduced content exceeds a sound pressure level of noise.

Specifically, as illustrated in part (a) of Fig. 4, noise generated by the moving body is louder in a low frequency band than in other frequency bands. Therefore, the noise caused by the moving body is less likely to fall below the sound pressure level of sound of reproduced content in the low frequency band. On the other hand, in a high frequency band, the noise caused by the moving body may be lower than the sound pressure level of the sound of the reproduced content.

Here, it is conceivable to use a headphone or an earphone in the case of listening to sound of content such as a music service in the moving body. However, in a case where the occupant wears the headphone or the earphone for a long time, discomfort may occur to the occupant.

Therefore, it is conceivable to provide sound of content such as a music service without using a headphone or an earphone.

It is sufficient if the occupant listens to the sound of the content without wearing the headphone or the earphone, but if the playback level of the sound of the content from the speaker increases, sound leakage occurs. In particular, in the high frequency band, sound leakage from private room 10 is likely to occur. In addition, in a case where a plurality of private rooms 10 are adjacent to each other, sound leakage occurs in a target space of adjacent private rooms 10, or sound leakage occurs in an adjacent passage. Such sound leakage becomes noise for other occupants and is a nuisance for the other occupants, and may interfere with the operation of the moving body. Here, the playback level indicates sound volume, sound pressure, and the like when the speaker reproduces an audio signal indicating the sound of the content.

It is sufficient to reduce the playback level of the sound of the content from the speaker, but it becomes difficult to hear the sound from the speaker in the moving body in a noise environment.

Therefore, sound control system 1 configured to secure sound volume from the speaker while suppressing sound leakage in a noise environment of the moving body is required.

### <Functions and Configuration>

Next, functions and a configuration of sound control system 1 according to the present exemplary embodiment will be described with reference to Figs. 1 to 5.

As illustrated in Figs. 1A, 1B, and 2, sound control system 1 includes seat 12, private room 10, first speaker 21, second speaker 22, microphone 23, and sound controller 30.

Seat 12 includes seating part 13b and backrest part 13a, and backrest part 13a can be reclined with respect to seating part 13b.

Seating part 13b is a long seat cushion on which an occupant sits. Seating part 13b can support the buttocks, the thighs, and the like of the occupant.

Backrest part 13a is a long seat back that supports the acromion, the back, and the waist of the occupant seated on seat 12. Backrest part 13a is connected to seating part 13b so as to be rotatable with respect to one end edge of seating part 13b. Therefore, backrest part 13a can be reclined with respect to seating part 13b. That is, as illustrated in part (a) of Fig. 5, backrest part 13a is disposed so as to be in the upright orientation with respect to seating part 13b, or as illustrated in part (c) of Fig. 5, backrest part 13a is disposed so as to be in a reclining orientation parallel to seating part 13b. That is, backrest part 13a can recline the occupant by rotating with respect to seating part 13b. The upright orientation is a position where backrest part 13a is not inclined, and the reclining orientation is a position where backrest part 13a is inclined and backrest part 13a is parallel to a seat surface.

Private room 10 is formed by peripheral wall 11 disposed to surround at least a part of a periphery of seat 12. It can be said that peripheral wall 11 is also a partition formed so as to be able to partition a target space of a private room type. From the viewpoint of security, an upper portion of private room 10, that is, an upper portion of peripheral wall 11, is opened.

Although peripheral wall 11 forms the target space, private room 10 is provided with entrance 11a (opening) through which the occupant can enter and exit the target space. That is, peripheral wall 11 is disposed around seat 12 except for entrance 11a. However, peripheral wall 11 is disposed behind backrest part 13a. A door may or may not be installed in entrance 11a.

Monitor 25 may be disposed on peripheral wall 11 in a front direction of the occupant when the occupant is seated on seat 12. Monitor 25 displays a set value of a playback level used when sound of content presented through first speaker 21 and second speaker 22 is reproduced, and displays a video of content corresponding to sound of the content. Monitor 25 is, for example, a liquid crystal display (LCD) or an organic electroluminescence (EL) display device. Monitor 25 may be included in components of sound control system 1, but may not be included in the components of sound control system 1.

One or more first speakers 21 are disposed on backrest part 13a.

In the present exemplary embodiment, first speaker 21 is disposed on an upper portion of backrest part 13a when backrest part 13a is in the upright orientation. Here, the upper portion is at least any position of the upper half of backrest part 13a in a vertical direction. That is, first speaker 21 is disposed on seating part 13b side of backrest part 13a so as to correspond to the head of the occupant, and is disposed so as to face the head of the person.

In the present exemplary embodiment, on backrest part 13a, the pair of first speakers 21(21R, 21L) is disposed on the left and right sides of backrest part 13a so as to correspond to both ears of the head of the occupant.

First speaker 21 is controlled by sound controller 30 so as not to cause sound leakage outside the target space, thereby outputting the sound according to the audio signal output from sound controller 30.

Second speaker 22 is disposed on peripheral wall 11 so as to face seat 12, that is, to face the head of the person. As illustrated in Fig. 1A, when backrest part 13a of seat 12 is inclined, the head of the occupant moves closer to peripheral wall 11 positioned behind backrest part 13a. Accordingly, second speaker 22 may be positioned behind backrest part 13a. Accordingly, the head of the occupant moves closer to peripheral wall 11, so that the occupant can easily hear the sound of the content output from second speaker 22.

In a case where peripheral wall 11 is disposed on the left and right sides of backrest part 13a, second speaker 22 may be disposed on peripheral wall 11 disposed on the left and right sides of seat 12 as illustrated in Fig. 1B. It is preferable that second speaker 22 be disposed behind seating part 13b and be not disposed in front of seat 12.

In other words, it is preferable that second speaker 22 be disposed on the rear side of backrest part 13a. The rear side is behind seating part 13b connected. When second speaker 22 is disposed forward, second speaker 22 is separated from the occupant seated on seat 12. Therefore, in order to make it easier for the occupant to hear, it is necessary to increase the playback level of second speaker 22, and the sound of the content output from second speaker 22 may leak from private room 10.

One or more second speakers 22 may be disposed. For example, the pair of second speakers 22 (22R and 22L) may be disposed on peripheral wall 11 positioned behind backrest part 13a, or the pair of second speakers 22 (22R and 22L) may be disposed on peripheral wall 11 disposed on the left and right sides of backrest part 13a.

Second speaker 22 is controlled by sound controller 30 so as not to cause sound leakage outside the target space, thereby outputting the sound reproduced in accordance with the audio signal. The sound reproduced by second speaker 22 may be different from the playback level of the sound reproduced by first speaker 21, but is the same as the content reproduced by first speaker 21.

The microphone 23 is disposed on an upper portion of peripheral wall 11. Microphone 23 is disposed on the upper portion of peripheral wall 11 and positioned higher than the center of cone 21a of first speaker 21. In the present exemplary embodiment, the pair of microphones 23 (23R and 23L) is disposed on peripheral wall 11 disposed on the left and right sides of seat 12.

From the viewpoint of collecting surrounding noise and sound of leakage from private room 10, it is preferable that microphone 23 be disposed outside private room 10. Note that microphone 23 may be disposed inside private room 10.

As illustrated in Figs. 1A, 1B, and 2, microphone 23 can collect environmental sound in which noise caused by the moving body, sound that has leaked from peripheral wall 11, and the like are mixed. That is, the environmental sound is mixed sound including the noise generated with the movement of the moving body and the sound that has leaked from peripheral wall 11. The sound that has leaked from peripheral wall 11 is mainly sound of the content reproduced by first speaker 21 and second speaker 22. Microphone 23 outputs an audio signal of the collected environmental sound to sound controller 30.

Sound controller 30 can control the playback levels of first speaker 21 and second speaker 22 that output the sound of the content.

Specifically, sound controller 30 includes storage 31, acquisition unit 32, and processor 40.

Storage 31 temporarily stores information and the like indicating the orientation of backrest part 13a to be described later, and stores a program and control data necessary for executing various processes. Storage 31 is constituted by a memory including, for example, a random access memory (RAM), a read only memory (ROM), and the like. Note that storage 31 may be a storage medium such as a flash memory, a hard disk drive (HDD), or a solid state drive (SSD).

Storage 31 also stores transfer functions between microphone 23 and first speaker 21 and second speaker 22. The transfer functions indicate, in a frequency domain, how the reproduced sound propagates and changes (for example, attenuates) between microphone 23 and first speaker 21 and second speaker 22. In the present exemplary embodiment, the transfer functions between microphone 23 and first speaker 21 and second speaker 22 are measured in advance for each combination of the pair of microphones 23 and the pair of first speakers 21, and measured in advance for each combination of the pair of microphones 23 and the pair of second speakers 22.

Specifically, as illustrated in Figs. 2, 3A, and 3B, the transfer function between microphone 23 and first speaker 21 has characteristic data indicating the transfer function between microphone 23L and first speaker 21L, characteristic data indicating the transfer function between microphone 23L and first speaker 21R, characteristic data indicating the transfer function between microphone 23R and first speaker 21L, and characteristic data indicating the transfer function between microphone 23R and first speaker 21R. The transfer function between microphone 23 and second speaker 22 includes characteristic data indicating the transfer function between microphone 23L and second speaker 22L, characteristic data indicating the transfer function between microphone 23L and second speaker 22R, characteristic data indicating the transfer function between microphone 23R and second speaker 22L, and characteristic data indicating the transfer function between microphone 23R and second speaker 22R.

Since backrest part 13a is reclined, these transfer functions change in accordance with a change in the positional relationship between microphone 23 and first speaker 21 and second speaker 22. Therefore, storage 31 has characteristic data corresponding to the orientation of backrest part 13a. For example, storage 31 may have characteristic data every time the orientation of backrest part 13a is reclined by 10 degrees. Note that the angle at which the orientation of backrest part 13a is acquired is not limited thereto.

As described above, the number of pieces of the characteristic data indicated by the transfer functions between microphone 23 and first speaker 21 and second speaker 22 is determined according to a combination of the number of microphones 23, first speaker 21, and second speaker 22, and the number of orientations of backrest part 13a.

Acquisition unit 32 acquires information indicating the orientation of backrest part 13a. For example, acquisition unit 32 may be an image sensor configured to image the orientation of backrest part 13a, a sensor that detects the inclination angle of backrest part 13a, a position sensor that detects the position of first speaker 21, or the like. Furthermore, in a case where the moving body controls the orientation of backrest part 13a, the acquisition unit 32 may be an input interface that simply acquires information indicating the orientation of backrest part 13a from the moving body. The information indicating the orientation of backrest part 13a includes at least one of an image indicating the orientation of backrest part 13a, the inclination angle of backrest part 13a with respect to the upright orientation such as whether backrest part 13a is in the upright orientation or the backrest part 13a is in the reclining orientation, the position of first speaker 21 disposed on backrest part 13a, and the like.

Acquisition unit 32 outputs the acquired information indicating the orientation of backrest part 13a to processor 40.

Processor 40 operates according to the program and the control data stored in the storage unit 31. That is, processor 40 performs control processing for overall control of the operation of sound controller 30, data processing with each unit in sound controller 30, and data storage processing. Processor 40 includes, for example, a digital signal processor (DSP), a central processing unit (CPU), a field programmable gate array (FPGA), or the like.

Specifically, processor 40 acquires the audio signal collected by microphone 23 from microphone 23, and acquires the information indicating the orientation of backrest part 13a from acquisition unit 32. Processor 40 may calculate the position (data) of first speaker 21 from the image of backrest part 13a or the inclination angle of backrest part 13a based on the information indicating the orientation of backrest part 13a, or may directly acquire the position (data) of first speaker 21 from the information indicating the orientation of backrest part 13a. Processor 40 stores the data calculated or acquired in this manner into storage 31.

Processor 40 controls the playback level of the sound reproduced by first speaker 21 based on the audio signal based on the environmental sound collected by microphone 23 and the orientation of backrest part 13a indicated by the information acquired by acquisition unit 32. The control method will be described later in functions of the processor 40.

Further, processor 40 may control the playback level of the sound reproduced by second speaker 22 based on the audio signal based on the environmental sound collected by microphone 23 and the orientation of backrest part 13a indicated by the information acquired by acquisition unit 32. The control method will be described later in the functions of the processor 40. For example, processor 40 may lower the playback level of second speaker 22 as backrest part 13a is inclined. As a result, it is possible to reduce a change in the sound volume from second speaker 22 at the position of the head of the occupant, which occurs in response to a change in the orientation of backrest part 13a.

Functions of processor 40 will be described below. Processor 40 includes noise calculator 41, sound output unit 42, adder 43, filter determination unit 44, suppression filter 45, and gain adjuster 46.

Noise calculator 41 calculates a signal obtained by removing the audio signal from sound controller 30 from the audio signal of the environmental sound by using the audio signal of the environmental sound collected by microphone 23 and the audio signal output from sound controller 30 and input to each of first speaker 21 and second speaker 22. That is, noise calculator 41 calculates a frequency characteristic (noise characteristic) of noise of the moving body obtained by removing the audio signal, which is the sound of the content at the position of microphone 23 output from adder 43 described later, from the audio signal of the environmental sound collected by microphone 23 so as to prevent sound leakage outside the target space. Noise calculator 41 outputs the calculated frequency characteristic of the noise to filter determination unit 44.

Sound output unit 42 outputs, to each of adder 43 and first speaker 21, the sound of the content suppressed by suppression filter 45 or the sound of the content suppressed by suppression filter 45 and gain-adjusted by gain adjuster 46.

Adder 43 convolves the characteristic data of the transfer function between first speaker 21 and microphone 23 according to the orientation of backrest part 13a read from storage 31 with the sound of the content from sound output unit 42, thereby calculating the frequency characteristic of the sound of the content to be reproduced by first speaker 21 at the position of microphone 23 based on each combination of the position of first speaker 21 and position of microphone 23 stored in storage 31. Adder 43 outputs the frequency characteristic of the sound of the content to be reproduced by first speaker 21 at the position of microphone 23 to noise calculator 41 and filter determination unit 44.

As illustrated in parts (a) and (b) of Fig. 4, filter determination unit 44 determines to update or maintain a filter coefficient of suppression filter 45 based on the frequency characteristic of the noise and the frequency characteristic of the sound of the content to be reproduced by first speaker 21 at the position of microphone 23. That is, for example, in each of sub-frequency bands obtained by equally dividing an operation frequency band, the filter determination unit 44 updates the filter coefficient (example of the characteristics of suppression filter indicated by the alternate long and short dash line) of suppression filter 45 that can suppress the sound in the corresponding sub-frequency band so that the sound pressure level (example of the characteristics of the sound convolved by the transfer function indicated by the solid line) of the sound of the content at the position of microphone 23 does not exceed the sound pressure level (example of the characteristics of the noise indicated by the broken line) of the noise. In addition, for a sub-frequency band in which the sound pressure level of the noise exceeds the sound pressure level of the sound of the content at the position of microphone 23, filter determination unit 44 does not update and maintains the filter coefficient of suppression filter 45 corresponding to the sub-frequency band. Suppression filter 45 generates a suppression filter indicated by a solid line in part (c) of Fig. 4 by combining filter coefficients corresponding to the respective transfer functions after the determination to update or maintain the filter coefficient.

Here, as indicated by the solid line in part (c) of Fig. 4, it is preferable that the combination of the plurality of suppression filters 45 be updated or maintained by combining characteristics of suppression filter 45 that most suppresses sound for each sub-frequency band. In this case, at the position of predetermined microphone 23, the filter is updated or maintained so that the sound pressure level of the sound of the content from any of first speakers 21 does not exceed the sound pressure level of the noise. Therefore, sound leakage is less likely to occur.

The combination of the plurality of suppression filters 45 may be a combination of the characteristics of suppression filter 45 that most suppresses sound for each sub frequency band among the combinations of first speakers 21 and microphones 23 arranged at various positions. In this case, since the filter is updated or maintained such that the sound pressure level of the noise is not exceeded at the position of any microphone 23, sound leakage is less likely to occur. The method of combining the suppression filters is not limited thereto. For example, the suppression filters may be combined such that an allowable value of sound leakage to be described later is set for each position of microphone 23 so as not to cause sound leakage. In addition, the suppression filters may be combined such that the calculation processing amount is reduced and that the gradient is gentle in the characteristics of the filters.

Suppression filter 45 includes, for example, a multistage tap, and is a Finite Impulse Response (FIR) filter in which a filter coefficient of each tap can be freely set. The update of the filter coefficient is implemented by a predetermined algorithm (for example, Least Mean Square (LMS)).

Suppression filter 45 suppresses the sound of the content using the combined filter coefficient in the corresponding frequency band. Suppression filter 45 outputs, to gain adjuster 46, the sound of the content in which the corresponding frequency band is suppressed.

Gain adjuster 46 adjusts the gain of the sound of the content after the suppression by suppression filter 45, and outputs the content to first speaker 21.

In this manner, processor 40 can control the playback level of the sound reproduced by first speaker 21.

The playback level of the sound may be controlled by replacing "first speaker 21" with "first speaker 21 and second speaker 22" in calculating the playback level of the sound.

### <Operation 1>

An operation of processor 40 when backrest part 13a is inclined will be described below.

Processor 40 can increase the upper limit value of the playback level of the sound reproduced by first speaker 21 at a predetermined frequency as backrest part 13a is gradually inclined. That is, as the orientation of backrest part 13a changes from the upright orientation to the reclining orientation based on the information indicating the orientation of backrest part 13a, processor 40 further increases the upper limit value of the playback level of the sound reproduced by first speaker 21 at the predetermined frequency. In this case, the predetermined frequency is in a specific frequency band in which the playback level is increased, or is in an entire frequency band.

Specifically, when backrest part 13a is gradually inclined, the distance between first speaker 21 and microphone 23 gradually increases, and thus the transfer function also changes. In this case, processor 40 acquires a transfer function according to the orientation of backrest part 13a from storage 31, and switches the transfer function to be used. In this case, for example, even if the playback level indicated by the solid line indicating the example of the characteristics of the convoluted sound exceeds the playback level indicated by the broken line indicating the example of the characteristic of the noise at the predetermined frequency in part (a) of Fig. 4, sound leakage may not occur due to the switching of the transfer function. In such a case, processor 40 can further increase the upper limit value of the playback level of the sound reproduced by first speaker 21 at the predetermined frequency. That is, the upper limit value of the playback level is increased within a range of allowable sound leakage.

In this case, instead of switching the transfer function to be used, the upper limit value of the playback level may be increased by changing the allowable value of sound leakage calculated from the difference between the noise at the position of microphone 23 and the sound of the content. For example, the allowable value may be set to 0dB when backrest part 13a is in the upright orientation, and the allowable value may be set to 6dB when backrest part 13a is in the reclining orientation. In this case, it is sufficient that the transfer function in the case where backrest part 13a is in the upright orientation is stored in storage 31. For the increase in the allowable value, a value for further increasing the upper limit value of the playback level according to the inclination of backrest part 13a may be set in advance. In this case, a table of the inclination of backrest part 13a and the value for further increasing the upper limit value of the playback level may be stored in storage 31.

In addition, the upper limit value here may be a set value of the playback level to be used to reproduce the sound of the content presented to the occupant through monitor 25, first speaker 21, or second speaker 22. For example, when the sound of the content is suppressed by suppression filter 45, the occupant may be notified that the setting of the playback level is the upper limit value. In this case, the occupant may be notified that the upper limit value of the playback level has increased in response to backrest part 13a moving closer to the reclining orientation.

Further, when the playback level reaches the upper limit value, the playback level may not be increased by the occupant. In this case, the playback level may be increased by the occupant in response to backrest part 13a moving closer to the reclining orientation.

As described above, as backrest part 13a moves closer to the reclining orientation, the volume of the sound of the content output from first speaker 21 increases. As a result, when backrest part 13a moves closer to the reclining orientation, first speaker 21 is separated from the upper portion of opened private room 10, so that it is possible to expect suppression of sound leakage from the upper portion of private room 10.

Note that, in the present exemplary embodiment, the example has been described in which processor 40 reads the transfer function according to the orientation of backrest part 13a from storage 31 and uses the transfer function for calculation of the filter coefficient of suppression filter 45, but the method of calculating the transfer function is not limited thereto. For example, in a case where backrest part 13a is in the upright orientation, the frequency characteristic of the transfer function may be adjusted as the distance between first speaker 21 and microphone 23 increases with reference to the transfer function for one orientation.

### <Arrangement of second speaker 22>

Next, the arrangement of second speaker 22 according to the present exemplary embodiment will be described.

As illustrated in Figs. 1 and 5, second speaker 22 is disposed on peripheral wall 11 such that the height of the center of cone 22a is lower than a lower end of cone 21a of first speaker 21. In other words, when backrest part 13a is in the upright orientation, second speaker 22 is disposed on peripheral wall 11 such that the height of the center of cone 22a of second speaker 22 is lower than the lower end of cone 21a of first speaker 21.

As a result, since second speaker 22 can be separated from the upper portion of opened private room 10 as much as possible, suppression of sound leakage from the upper portion of private room 10 can be expected.

Second speaker 22 is disposed on peripheral wall 11 such that the height of the center of cone 22a is higher than seat surface 13c of seating part 13b. A lower limit on the position of second speaker 22 does not depend on the orientation of backrest part 13a.

Thus, when backrest part 13a is in the reclining orientation, the center of cone 22a of second speaker 22 is disposed above backrest part 13a parallel to seat surface 13c without being buried in the seat. Therefore, even when backrest part 13a is in the reclining orientation, the occupant can listen to the sound reproduced by second speaker 22 without a reduction in the quality of the sound.

Cone 21a of first speaker 21 is smaller than cone 22a of second speaker 22. That is, cone 21a of first speaker 21 is smaller in diameter than cone 22a of second speaker 22.

This is because the sound in the high frequency band as illustrated in part (a) of Fig. 4 tends to leak out of private room 10 because the effect of the environmental noise in the moving body is small. Therefore, in order to obtain sufficient sound volume while suppressing sound leakage, it is preferable to reduce the playback level of the sound in the high frequency band and output the sound in the high frequency band in the vicinity of the ears of the occupant as much as possible. That is, it is preferable that first speaker 21 output sound in the high frequency band.

On the other hand, sound in a middle frequency band and sound in the low frequency band are more likely to spread than sound in the high frequency band. Therefore, it is preferable that second speaker 22 disposed lower than first speaker 21 and away from the upper portion of opened private room 10 outputs the sound in the middle frequency band and the sound in the low frequency band.

By appropriately arranging first speaker 21 and second speaker 22 in charge of the frequency bands for reproduction as described above, sound leakage is effectively prevented while a comfortable viewing environment for the occupant is provided.

Therefore, in such an arrangement, it is preferable that cone 21a of first speaker 21 be smaller than cone 22a of second speaker 22 from the viewpoint of the frequency at which sound is reproduced. In terms of space, the space around the head of the occupant can be further widened by reducing the size of cone 21a of first speaker 21 disposed in the vicinity of the ears of the occupant.

### <Operation 2>

Adjustment of the playback levels of first speaker 21 and second speaker 22 will be described. Operation 2 differs from operation 1 in a method for controlling first speaker 21. Control of second speaker 22 described below may be executed in combination with control of first speaker 21 described in operation 1.

In first speaker 21 and second speaker 22, it is preferable to adjust the playback level from second speaker 22 according to the orientation of backrest part 13a while outputting the sound in the high frequency band without changing the playback level from first speaker 21 disposed at positions close to the ears of the occupant.

Specifically, processor 40 changes the playback level of the sound (the sound of the content) to be reproduced by second speaker 22 based on the orientation of backrest part 13a, but does not change the playback level of first speaker 21.

For example, since first speaker 21 is disposed in the vicinity of the ears of the occupant, distances between the ears of the occupant and first speaker 21 do not change much. However, distances between the ears of the occupant and second speaker 22 greatly change according to the orientation of backrest part 13a. Therefore, in order to keep the sound volume at the ears of the occupant, it is preferable to change the playback level of the sound reproduced by second speaker 22 according to the orientation of backrest part 13a.
(1) Specifically, as illustrated in part (a) of Fig. 5, when backrest part 13a is in the upright orientation, the distances between the ears of the occupant and second speaker 22 are significantly long, and therefore processor 40 increases the playback level of the sound reproduced by second speaker 22 to the highest level.
(2) As illustrated in part (b) of Fig. 5, when backrest part 13a is between the upright orientation and the reclining orientation, the distances between the ears of the occupant and second speaker 22 are shorter than those in part (1), and therefore processor 40 sets the playback level of the sound reproduced by second speaker 22 to a medium level lower than that in part (1).
(3) As illustrated in part (c) of Fig. 5, when backrest part 13a is in the reclining orientation, the distances between the ears of the occupant and second speaker 22 are shorter than those in part (2), and therefore processor 40 lowers the playback level of the sound reproduced by second speaker 22 to the lowest level.

In parts (1) to (3), processor 40 may not change the playback level of the sound reproduced by first speaker 21. That is, the playback level of the sound reproduced by first speaker 21 may be made constant, and only the playback level of the sound reproduced by second speaker 22 may be changed. Therefore, even if the orientation of backrest part 13a changes in the arrangement of first speaker 21 and second speaker 22 that prevent sound leakage, a comfortable viewing environment for the occupant can be provided.

First speaker 21 only needs to maintain the playback level at least in a predetermined frequency band where second speaker 22 is difficult to reproduce.

### <Operations and effects>

Next, operations and effects of sound control system 1 according to the present exemplary embodiment will be described.

As described above, sound control system 1 according to technique 1 in the present exemplary embodiment includes seat 12 having seating part 13b and backrest part 13a and capable of reclining backrest part 13a with respect to seating part 13b, first speaker 21 disposed on backrest part 13a, peripheral wall 11 disposed to surround at least a part of the periphery of seat 12, microphone 23 disposed on the upper portion of peripheral wall 11, and processor 40. Processor 40 controls a playback level of sound reproduced by first speaker 21 based on environmental sound collected by microphone 23 and an orientation of backrest part 13a.

According to this, since the playback level of the sound reproduced by first speaker 21 is controlled according to the environmental sound and the orientation of backrest part 13a, it is possible to suppress sound leakage from private room 10 to which sound control system 1 is applied.

Since first speaker 21 is disposed on backrest part 13a, first speaker 21 can be disposed in the vicinity of the ears of the occupant. Therefore, even if the playback level of the sound reproduced by first speaker 21 is not increased, it is possible to secure the playback level of the sound that the occupant can listen to.

Therefore, according to sound control system 1, it is possible to secure sound volume from first speaker 21 while suppressing sound leakage in a noise environment of the moving body.

Sound control system 1 according to technique 2 in the present exemplary embodiment is sound control system 1 described in technique 1. In this case, processor 40 increases an upper limit value of the playback level of the sound reproduced by first speaker 21 at a predetermined frequency as backrest part 13a is gradually inclined.

According to this, as the inclination of backrest part 13a increases, the position of first speaker 21 is disposed at a lower position, and thus first speaker 21 can be separated from the upper portion of private room 10 as much as possible. Therefore, even if the playback level of first speaker 21 is increased according to the inclination of backrest part 13a, it is possible to expect suppression of sound leakage from the upper portion of private room 10.

Sound control system 1 according to technique 3 in the present exemplary embodiment is sound control system 1 described in technique 1 or 2. In this case, microphone 23 is disposed on an upper portion of peripheral wall 11 and positioned higher than the center of cone 21a in first speaker 21.

According to this, microphone 23 can collect the sound of content that has been reproduced by first speaker 21 and is likely to leak upward from private room 10. Therefore, it is possible to detect sound volume at which sound leakage may occur from the private room 10. Thus, processor 40 can control the playback level of the sound reproduced by first speaker 21 so as to suppress sound leakage.

In addition, sound control system 1 according to technique 4 in the present exemplary embodiment is sound control system 1 described in any one of the techniques 1 to 3. In this case, processor 40 controls the playback level using a transfer function between microphone 23 and first speaker 21 according to an orientation of backrest part 13a.

Accordingly, the transfer function can be calculated based on a change in the distance between first speaker 21 and microphone 23 according to a change in the inclination of backrest part 13a. Therefore, processor 40 can more appropriately control the playback level of the sound reproduced by first speaker 21.

Sound control system 1 according to technique 5 in the present exemplary embodiment is sound control system 1 described in technique 4. In this case, processor 40 calculates reproduction sound that is sound reproduced by first speaker 21 at the position of microphone 23 using the transfer function, and controls the playback level using noise obtained by removing the reproduction sound from the environmental sound and the reproduction sound.

According to this, in order to prevent sound leakage outside the target space, it is possible to calculate the frequency characteristic (noise characteristic) of the noise of the moving body obtained by removing the audio signal, which is the sound of the content at the position of microphone 23 output from adder 43 described later, from the audio signal of the environmental sound collected by microphone 23 in consideration of the change in the inclination of backrest part 13a. Since the calculated frequency characteristic of the noise can be more appropriately calculated and the playback level can be controlled, sound volume from first speaker 21 and second speaker 22 according to a change in the inclination of backrest part 13a can be secured while sound leakage is suppressed in a noise environment of the moving body.

In addition, sound control system 1 according to technique 6 in the present exemplary embodiment is sound control system 1 described in any one of the techniques 1 to 5. In this case, second speaker 22 disposed on peripheral wall 11 is further included. At least a part of peripheral wall 11 is disposed behind backrest part 13a. Second speaker 22 is positioned behind backrest part 13a.

According to this, second speaker 22 can be disposed in the vicinity of backrest part 13a, and thus second speaker 22 can be moved closer to the ears of the occupant seated on seat 12. Since sound pressure levels at the positions of the ears of the occupant can be increased by first speaker 21 and second speaker 22, the occupant can easily hear the sound reproduced by second speaker 22.

Therefore, according to sound control system 1, it is possible to secure sound volume from first speaker 21 and second speaker 22 while suppressing sound leakage in a noise environment of the moving body.

Sound control system 1 according to technique 7 in the present exemplary embodiment includes: seat 12 having seating part 13b and backrest part 13a and configured to recline backrest part 13a with respect to seating part 13b; peripheral wall 11 disposed to surround at least a part of a periphery of seat 12; first speaker 21 disposed on backrest part 13a; and second speaker 22 disposed on peripheral wall 11, wherein second speaker 22 is disposed with a height of a center of cone 22a of second speaker 22 lower than a lower end of cone 21a of first speaker 21, and outputs sound at a frequency lower than a frequency of sound output by first speaker 21. That is, the frequency of the sound output from second speaker 22 is lower than the frequency of the sound output from first speaker 21.

According to this, first speaker 21 is disposed on backrest part 13a and thus first speaker 21 can be disposed at the ears of the occupant. Therefore, even if the playback level of the sound reproduced by first speaker 21 is not increased, it is possible to secure the playback level of the sound that the occupant can listen to.

Even if the sound in the high frequency band is reproduced from first speaker 21, the playback level of the sound reproduced by first speaker 21 does not become too high, so that the sound reproduced from first speaker 21 is less likely to leak from private room 10.

In addition, second speaker 22 that reproduces sound at lower frequencies (in the middle frequency band and the low frequency band) than those of sound reproduced by first speaker 21 is disposed at a position lower than the position of first speaker, so that it is possible to reduce leakage of sound which is at low frequencies and is likely to spread from the upper portion of private room 10. As a result, even if the playback level of second speaker 22 is increased, sound is less likely to leak from private room 10.

Therefore, according to sound control system 1, it is possible to secure sound volume from first speaker 21 and second speaker 22 while suppressing sound leakage in a noise environment of the moving body.

Sound control system 1 according to technique 8 in the present exemplary embodiment is sound control system 1 described in technique 7. In this case, sound control system 1 further includes processor 40. Processor 40 changes, based on an orientation of backrest part 13a, a playback level of sound reproduced by second speaker 22 without changing a playback level of sound reproduced by first speaker 21.

According to this, even if the distances between second speaker 22 and the ears of the occupant decrease as the orientation of backrest part 13a is inclined, processor 40 controls the playback level of the sound reproduced by second speaker 22 to gradually decrease in order to keep the sound volume audible to the occupant constant. For example, processor 40 decreases the playback level of the sound reproduced by second speaker 22 such that the transfer function used when the orientation of backrest part 13a is inclined is equal to the transfer function used when backrest part 13a is in the upright orientation.

Therefore, regardless of the orientation of the backrest, the playback level of sound audible to the occupant from first speaker 21 and second speaker 22 can be made constant.

Sound control system 1 according to technique 9 in the present exemplary embodiment is sound control system 1 described in technique 7 or 8. In this case, the height of the center of cone 22a of second speaker 22 is higher than seat surface 13c of seating part 13b.

According to this, when backrest part 13a is in the reclining orientation, the center of cone 22a of second speaker 22 is disposed above backrest part 13a parallel to seat surface 13c, so that the occupant can listen to the sound reproduced by second speaker 22 without the sound being blocked by backrest part 13a and seating part 13b.

In addition, sound control system 1 according to technique 10 in the present exemplary embodiment is sound control system 1 described in any one of the techniques 6 to 9. In this case, cone 21a of first speaker 21 is smaller than cone 22a of second speaker 22.

According to this, first speaker 21 and second speaker 22 having the cones with different sizes are disposed on backrest part 13a and peripheral wall 11, thereby making it possible to suppress an increase in size of cone 21a of first speaker 21 as compared to a case where only first speaker 21 is disposed. That is, it is possible to provide a comfortable viewing environment for the occupant in a limited space.

### (Other exemplary embodiments and the like)

Although the sound control system according to the present disclosure has been described above based on the above embodiments, the present disclosure is not limited to these embodiments.

For example, the processor included in the sound control system according to the above embodiment is typically implemented as an LSI which is an integrated circuit. These processing units may be individually integrated into one chip, or some or all of these processing units may be integrated into one chip.

In addition, the circuit integration is not limited to the LSI, and may be implemented by a dedicated circuit or a general-purpose processor. The circuit integration may be implemented using a field programmable gate array (FPGA) that can be programmed after manufacturing of an LSI or a reconfigurable processor in which connections and settings of circuit cells inside an LSI can be reconfigured.

Note that, in the above embodiment, the processor may be configured by dedicated hardware or may be implemented by executing a software program suitable for each component. Each component may be implemented by causing a program executor, such as a CPU or a processor, to read and execute a software program stored in a storage medium, such as a hard disk or a semiconductor memory.

In the above exemplary embodiment, the example in which the first speaker and the second speaker are disposed has been described. However, a third speaker may be disposed in addition to the first speaker and the second speaker. For example, the third speaker that reproduces sound in a lower frequency band than those in the first speaker and the second speaker may be disposed.

In addition, the division of the functional blocks in the block diagram is an example, and the plurality of functional blocks may be implemented as one functional block, one functional block may be divided into a plurality of functional blocks, or some functions may be transferred to another functional block. In addition, functions of a plurality of functional blocks having similar functions may be processed in parallel or in a time division manner by single hardware or software.

In addition, the present disclosure also includes modes obtained by making various modifications conceivable by those skilled in the art to the exemplary embodiment, and modes implemented by optionally combining components and functions in the exemplary embodiment without departing from the gist of the present disclosure.

### INDUSTRIAL APPLICABILITY

The present disclosure is applicable to, for example, seats for moving bodies such as aircrafts and railway vehicles, sofas, and the like.

### REFERENCE MARKS IN THE DRAWINGS

1 sound control system
11 peripheral wall
12 seat
13b seating part
13a backrest part
21, 21R, 21L first speaker
21a cone of first speaker
22, 22R, 22L second speaker
22a cone of second speaker
23, 23R, 23L microphone
40 processor

## Claims

1. A sound control system comprising:
a seat including a seating part and a backrest part configured to be reclined with respect to the seating part;
a first speaker disposed on the backrest part;
a peripheral wall disposed to surround at least a part of a periphery of the seat;
a microphone disposed on an upper portion of the peripheral wall; and
a processor, wherein
the processor controls a playback level of sound reproduced by the first speaker based on (i) environmental sound collected by the microphone and (ii) an orientation of the backrest part.

2. The sound control system according to Claim 1, wherein
the processor increases an upper limit value of the playback level at a predetermined frequency of the sound reproduced by the first speaker as the backrest part is gradually inclined.

3. The sound control system according to Claim 1 or 2, wherein
the microphone is disposed on an upper portion of the peripheral wall and positioned higher than a center of a cone of the first speaker.

4. The sound control system according to Claim 1 or 2, wherein
the processor controls the playback level by using a transfer function between the microphone and the first speaker according to an orientation of the backrest part.

5. The sound control system according to Claim 4, wherein
the processor
calculates reproduction sound that is sound reproduced by the first speaker at a position of the microphone using the transfer function; and
controls the playback level by using noise obtained by removing the reproduction sound from the environmental sound and the reproduction sound.

6. The sound control system according to Claim 1 or 2, further comprising
a second speaker disposed on the peripheral wall, wherein
at least a part of the peripheral wall is disposed on a rear side of the backrest part, and
the second speaker is positioned on the rear side of the backrest part.

7. A sound control system comprising:
a seat including a seating part and a backrest part configured to be reclined with respect to the seating part;
a peripheral wall disposed to surround at least a part of a periphery of the seat;
a first speaker disposed on the backrest part; and
a second speaker disposed on the peripheral wall, wherein
the second speaker is disposed with a height of a center of a cone of the second speaker lower than a lower end of a cone of the first speaker, and outputs sound at a frequency lower than a frequency of sound output by the first speaker.

8. The sound control system according to Claim 7, further comprising a processor, wherein
the processor changes, based on an orientation of the backrest part, a playback level of sound reproduced by the second speaker without changing a playback level of sound reproduced by the first speaker.

9. The sound control system according to Claim 7 or 8, wherein
the height of the center of the cone of the second speaker is higher than a seat surface of the seating part.

10. The sound control system according to Claim 7 or 8, wherein
the cone of the first speaker is smaller than the cone of the second speaker.
